(19) **Europäisches Patentamt / European Patent Office / Office européen des brevets**

(11) **EP 2 464 163 B1**

(12) **EUROPEAN PATENT SPECIFICATION**

(45) Date of publication and mention of the grant of the patent:
**21.03.2018 Bulletin 2018/12**

(51) Int Cl.:
**H04L 5/00** *(2006.01)*    *H04W 24/02* *(2009.01)*
**H04W 48/08** *(2009.01)*    *H04W 48/16* *(2009.01)*

(21) Application number: **10806052.6**

(22) Date of filing: **06.08.2010**

(86) International application number:
**PCT/CN2010/075767**

(87) International publication number:
**WO 2011/015148 (10.02.2011 Gazette 2011/06)**

(54) **METHODS, DEVICE AND USER EQUIPMENT FOR CONFIGURING REFERENCE SIGNALS**

VERFAHREN, VORRICHTUNG UND BENUTZERGERÄT ZUR KONFIGURATION VON REFERENZSIGNALEN

PROCÉDÉS, DISPOSITIF ET ÉQUIPEMENT UTILISATEUR PERMETTANT DE CONFIGURER DES SIGNAUX DE RÉFÉRENCE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.08.2009   CN 200910091107**
**28.10.2009   CN 200910208770**

(43) Date of publication of application:
**13.06.2012   Bulletin 2012/24**

(60) Divisional application:
**18156350.3**

(73) Proprietor: **Huawei Technologies Co., Ltd.**
**Longgang District**
**Shenzhen, Guangdong 518129 (CN)**

(72) Inventors:
- **ZHOU, Mingyu**
  **Shenzhen**
  **Guangdong 518129 (CN)**
- **LIU, Kunpeng**
  **Shenzhen**
  **Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**WO-A1-2009/035386    WO-A2-2009/023692**

**CN-A- 101 500 242**

- **HUAWEI: "Considerations on the Uplink Reference Signal for CoMP", 3GPP DRAFT; R1-091267 CONSIDERATIONS ON THE UPLINK REFERENCE SIGNAL FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050338875, [retrieved on 2009-03-17]**
- **NOKIA SIEMENS NETWORKS ET AL: "Uplink DM RS from CoMP viewpoint", 3GPP DRAFT; R1-091760, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339285, [retrieved on 2009-04-28]**
- **PANASONIC: "Discussion on PUCCH coordination for UL CoMP", 3GPP DRAFT; R1-091165, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050338786, [retrieved on 2009-03-17]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

• MOTOROLA: "Uplink DM RS PUSCH Sequence-shift Pattern", 3GPP DRAFT; DRAFT CR ON UL DM RS PUSCH SEQUENCE-SHIFT PATTERN 36.211-830, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080630, 25 June 2008 (2008-06-25), XP050417708, [retrieved on 2008-06-25]

• CATT ET AL: "Analysis of SRS scheme for CoMP", 3GPP DRAFT; R1-092776, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050351232, [retrieved on 2009-06-24]

**Description**

**FIELD OF THE INVENTION**

The present invention relates to the field of communications technologies, and in particular, to a method, a device and a user equipment for configuring a reference signal.

**BACKGROUND OF THE INVENTION**

In a conventional communications system, a reference signal (Reference Signal, RS for short) is generally formed by performing modulation with a certain sequence actually known by a sender and a receiver. After the sender sends the reference signal, the receiver receives according to the actually known sequence, so as to obtain channel situation in a corresponding time period, at a corresponding frequency, or on corresponding antenna resources. By taking a sounding reference signal (Sounding Reference Signal, SRS for short) of a UE as an example, an evolved Node B (evolved Node B, eNB) may schedule one or more cells. In order to enable the eNB to perform uplink scheduling reasonably, the eNB needs to obtain uplink broadband channel information of the user equipment (User Equipment, UE for short), and the uplink broadband channel information needs to be acquired through the SRS of the UE. Specifically, the eNB schedules a resource of the SRS for the user equipment UE, the UE sends the SRS through the resource, and the eNB performs detection after receiving the SRS sent by the UE, so as to obtain the uplink broadband channel information. Generally, the UE is served by only one cell, and the eNB may enable the SRS of the UE in the cell to be orthogonal to SRSs of other UEs in this cell through scheduling, thereby ensuring preferable detecting performance of the SRS.

In a future communications system, a coordinated multi-point (Coordinated Multi-Point, CoMP for short) transmission technology is introduced, so that the UE may be served by multiple cells, and in a CoMP system, the UE capable of being served by multiple cells is referred to as a (CoMP UE, UEm). On uplink, a signal sent by the UEm may be received by detectors of multiple cells, so that the signal transmitted through uplink may acquire diversity gains among the multiple cells, thereby improving the system performance.

During the implementation of the present invention, it is found that, the prior art has not proposed how to configure an RS for the CoMP UE in the CoMP system, so the prior art cannot reduce interference generated by the RS between the UEms in the CoMP system.

Document "Considerations on the Uplink Reference Signal for CoMP", 3GPP TSG RAN WG1, R1-091267 discloses considerations on the uplink reference signal for CoMP, wherein, supposing UE1 is registered to Cell B, and UE1 is a UL CoMP user, its active CoMP set is Cell B and Cell C, i.e. the signal from UE1 can be received by Cell B and Cell C. The Cell B and Cell C construct an active CoMP set . In order to support CoMP MU-MIMO, Cell B and Cell C may share the orthogonal PUSCH RS resource. For Cell C itself, the MU-MIMO involving CoMP users and Non-CoMP users should also be supported. The scheduler of Cell C may allocate the same time-frequency resource to UE2 which is not a UL CoMP user. This may lead to the PUSCH RS collision between UE1 and UE2 in Cell C. To make sure the demodulation performance, one rational way is to keep the cross correlation of the PUSCH DMRS of UE1 and UE2 very low to improve the channel estimation, the PUSCH DM RS for CoMP user and Non-CoMP user is orthogonal to each other. No multi-user interference will be introduced into the channel estimation. This scheme could get the best performance of UL CoMP.

Document "Uplink DM RS from CoMP viewpoint", 3GPP TSG RAN WG1, R1-091760 discloses an Uplink DM RS from CoMP viewpoint, wherein a CoMP specific DM RS mode is introduced. Normal/CoMP DM RS mode is configurable per UE to separate CoMP and non-CoMP UEs. CoMP DM RS mode uses one sequence group from the sequence groups allocated to the UL CoMP set cells. A cover code can be applied over the two DM RS symbols in CoMP mode, thus, orthogonalising DM RS between CoMP and non-CoMP UEs using the same sequence group.

Document "Discussion on PUCCH coordination for UL CoMP", 3GPP TSG RAN WG1, R1-091165 discloses PUCCH transmission schemes for CoMP, wherein the initial physical resource used for PUCCH transmission is linked to the first CCE index used for PDCCH for dynamic-ACK, or explicitly signaled via higher layer for persistent-ACK/CQI. The symbol-based cyclic shift hopping pattern is determined by the cell-id and the slot number within a radio frame.

Document "Uplink DM RS PUSCH Sequence-shift Pattern", 3GPP TSG RAN WG1, R1-082331 discloses an issue about group hopping, wherein The sequence-group number $u$ in slot $n_s$ is defined by a group hopping pattern $f_{gh}(n_s)$ and a sequence-shift pattern $f_{ss}$ according to

$$u = \left(f_{gh}\left(n_s\right) + f_{ss}\right) \bmod 30$$

There are 17 different hopping patterns and 30 different sequence-shift patterns. Sequence-group hopping can be enabled or disabled by higher layers. PUCCH and PUSCH have the same hopping pattern but may have different sequence-shift patterns.

Document "Analysis of SRS scheme for CoMP", 3GPP TSG RAN WG1, R1-092776 discloses an SRS scheme for CoMP, wherein both UE 1 and UE 2 are served by Cell 1 and Cell 2, with Cell 1 and Cell 2 being the serving cell for UE 1 and UE 2, respectively. Further, assume both UEs employ Rel-8 SRS as the feedback mechanism. In other words, the SRS resource allocation for each UE is solely determined by its serving cell. Note that different SRS root sequences may be used by UE 1 and UE 2.

## SUMMARY OF THE INVENTION

Embodiments of the present invention aim to provide a method, a device and a user equipment for configuring a reference signal, so as to realize the configuration of RSs for UEms, and avoid interference generated by RSs of the UEms.

An embodiment of the present invention provides a method for configuring a reference signal to a user equipment UEm served by at least two cells at the same time, according to the subject-matter of claim 1. An embodiment of the present invention further provides a method for configuring a reference signal, according to the subject-matter of independent claim 7. An embodiment of the present invention further provides a device for configuring a reference signal, according to the subject-matter of independent claim 9. An embodiment of the present invention further provides a user equipment UEm served by at least two cells at the same time, according to the subject-matter of independent claim 13. Further preferred embodiments are set out in the dependent claims. In the method, device and user equipment for configuring a reference signal provided in embodiments of the present invention, group number information of an RS allocated for a UE respectively by each cell is acquired; group offset information of the RS in the UE is acquired according to the group number information; and the group offset information is sent to a UEm, so that the UEm acquires new group number information according to the allocated group number information of the RS and the group offset information, and sends an RS according to the new group number information, thereby avoiding interference generated by the UE in each cell on a scheduled UEm when an eNB schedules the UEm.

## BRIEF DESCRIPTION OF THE DRAWINGS

In order to illustrate the technical solutions in the embodiments of the present invention or in the prior art more clearly, the accompanying drawings required to be used in the description of the embodiment or the prior art are briefly introduced in the following. It is obvious that the accompanying drawings to be described are only a part of the embodiments of the present invention. Other accompanying drawings may further be obtained by persons of ordinary skill in the art according to these accompanying drawings without creative efforts.

FIG. 1 is a schematic structure diagram of a CoMP system;
FIG. 2 is a schematic flow chart of an embodiment of a method for configuring a reference signal of the present invention;

FIG. 3 is a schematic flow chart of another embodiment of a method for configuring a reference signal of the present invention;
FIG. 4 is a schematic flow chart of still another embodiment of a method for configuring a reference signal of the present invention;
FIG. 5 is a schematic flow chart of yet another embodiment of a method for configuring a reference signal of the present invention;
FIG. 6 is a schematic structure diagram of an embodiment of a device for configuring a reference signal of the present invention;
FIG. 7 is a schematic structure diagram of another embodiment of a device for configuring a reference signal of the present invention;
FIG. 8 is a schematic structure diagram of an embodiment of a user equipment of the present invention;
FIG. 9 is a schematic structure diagram of another embodiment of a user equipment of the present invention;
FIG. 10 is a schematic structure diagram of an embodiment of a system for configuring a reference signal applicable to an embodiment of the present invention; and
FIG. 11 is a schematic structure diagram of another embodiment of a system for configuring a reference signal applicable to an embodiment of the present invention.

## DETAILED DESCRIPTION OF THE EMBODIMENTS

The technical solutions in embodiments of the present invention are clearly and completely described in the following with reference to the accompanying drawings. It is obvious that the embodiments to be described are only a part rather than all of the embodiments of the present invention. All other embodiments derived by persons of ordinary skill in the art based on the embodiments of the present invention without creative efforts should fall within the protection scope of the present invention, as defined by the appended claims. The reference signal may be a signal modulated through a sequence, for example, a demodulation reference signal or a sounding reference signal. The demodulation reference signal may be used to demodulate data, and the sounding reference signal may be used to sound channel information.

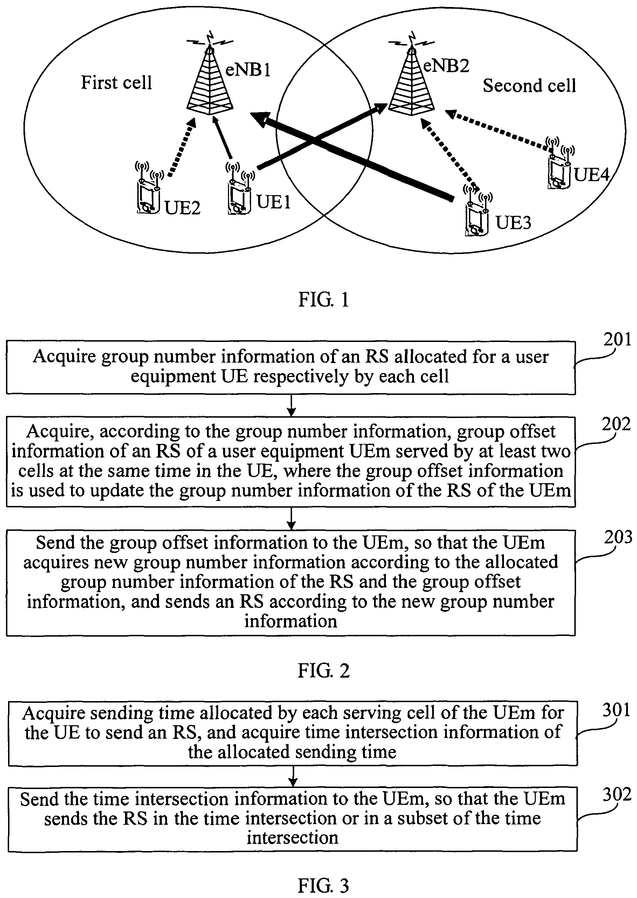

FIG. 1 is a schematic structure diagram of a CoMP system. As shown in FIG. 1, a UE1 in a first cell and a UE3 in a second cell may be provided with services by an eNB1 and an eNB2 at the same time, and belong to CoMP UEs (UEm) in the CoMP system. A UE2 in the first cell can only be provided with services by the eNB1, and a UE4 in the second cell can only be provided with services by the eNB2, and therefore, the UE2 and the UE4 belong to common UEs. In the first cell, through scheduling, the eNB1 may prevent an RS of the UE1 from being interfered by the UE2 in the first cell. In the second cell, if a part of or all resources of the RS used by the UE1 are occupied by the UE3 and the UE4 in the second cell, the eNB2 may be interfered when detecting the RS of the UE1, so that the eNB2 cannot obtain preferable detecting performance. The CoMP system shown in FIG. 1 is only a description, and the number of cells in the CoMP system in the embodiment of the present invention is not limited to the situation that is shown in FIG. 1 where totally two cells, that is, the first cell and the second cell, exist. The number of the first cell and the second cell in the embodiment of the present invention may be several according to actual situations, and the first cell and the second cell may be controlled by one eNB, or respectively controlled by two eNBs.

"Group number information" mentioned in the embodiments of the present invention below may specifically refer to a group number of a group where a sequence adopted by the RS locates. For example, the RS adopts constant amplitude zero auto correlation (Constant Amplitude Zero Auto Correlation, CAZAC for short) sequences, and M CAZAC sequences are divided into N groups (M is a number of all available CAZAC sequences, and N may be the number of the cells); and N group numbers exist in the N groups of CAZAC sequences. Based on attributes of the CAZAC sequence groups, UEs under the same cell use corresponding CAZAC sequences having the same length and under the same group number, and different UEs may perform different circulation shifts on the CAZAC sequence. Since the CAZAC sequences having the same length and under the same group number are orthogonal to one another after being subject to circulation shifts of different steps, the RS interference between different UEs under the same cell may be reduced.

In addition, in order to make the embodiments of the present invention more comprehensible, the group offset information is illustrated in detail with reference to FIG. 1 as follows.

As shown in FIG.1, the first cell serves the UE2 and the UE1, and the second cell serves the UE3 and the UE4, and in addition, the first cell and the second cell serve the UE1 and the UE3 at the same time, and the UE1 and the UE3 may be CoMP UEs. The first cell and the second cell have different identities (ID), so a group number u1 of the first cell is different from a group number u2 of the second cell. In order to avoid interference generated by a UEm (UE3) in the second cell on a scheduled UEm (UE1) in the first cell when the UEm (UE1) in the first cell is scheduled, the UEms (UE1, UE3) in the first cell and in the second cell need to have the same group number. Specifically, the following three manners may be used to enable all UEms in the first cell and the second cell to update respective group numbers, and enable the group numbers of the UEms to be the same. First, by taking the first cell as a reference, form a new group number for the UEm in the second cell by setting an offset for the group number of the second cell, and the new group number is the same as the group number of the UEm in the first cell, that is, u1=Δ+u2, the new group number is formed by adding Δ to the group number of the UEm in the second cell. Second, by taking the second cell as a reference, form a new group number for the UEm in the first cells by setting an offset for the group number of the first cell, and the new group number is the same as the group number of the UEm in the second cell, that is, u2=Δ+u1, the new group number is formed by adding Δ to the group number of the UEm in the first cell. Third, after setting an offset for the group number of the fist cell and the group number of the second cell, a new group number of the first cell and a new group number of the second cell are enabled to be the same, that is, u1+Δ1=u2+Δ2. Through the three manners, it may be realized that the UEm in the first cell and the UEm in the second cell form new group number information. The foregoing example only takes the UEm in the first cell being the UE1 and the UEm in the second cell being the UE3 as an example. However, the cells in the embodiment of the present invention are not limited to be two cells, and a UEm under multiple cells may be set during specific implementation, and the number of the UEm in each cell is not limited to be one, and multiple UEms may be set during specific implementation according to actual situations.

In addition, a primary cell mentioned in the following embodiments of the present invention may be a serving cell having one function or all functions as follows: determining a parameter of uplink transmission of the UE, sending a signaling to the UE, and/or cooperatively processing an uplink signal of the UE. Other cells serving the UE are referred to as auxiliary cells of the UE.

FIG. 2 is a schematic flow chart of an embodiment of a method for configuring a reference signal of the present invention. As shown in FIG. 2, this embodiment includes the following steps:

> Step 201: Acquire group number information of an RS allocated for a user equipment UE respectively by each cell;
> Step 202: Acquire, according to the group number information, group offset information of an RS of a user equipment UEm served by at least two cells at the same time in the UE, where the group offset information is used to update the group number information of the RS of the UEm; and
> Step 203: Send the group offset information to the UEm, so that the UEm acquires new group number information according to the allocated group number information of the RS and the group offset information, and sends an RS according to the new group number information.

In the method for configuring a reference signal provided in the embodiment of the present invention, group number information of an RS allocated for a UE respectively by each cell is acquired; group offset information of the RS in the UE is acquired according to the group number information; and the group offset information is sent to a UEm, so that the UEm acquires new group number information according to the allocated group number information of the RS and the group offset information, and sends an RS according to the new group number information, thereby avoiding interference generated between the UEms in the cells on when an eNB schedules the UEm.

Further, on the basis of the embodiment shown in FIG. 2, the step 203 may further include:

If the acquired group offset information is a group offset, the group offset is sent to the UEm in each cell, so that the UEm acquires new group number information according to a sum of or a difference between the allocated group number information of the RS and the group offset, so that different UEms have the same group number information of the reference signal. Specifically, illustration is made by taking two cells as an example, that is, a first cell and a second cell exist. The first cell has a group number being u1 and a group offset being Δ1, and the second cell has a group number being u2 and a group offset being Δ2. In order to enable new group number information of the UEm in the first cell and the UEm in the second cell to be the same, it may be enabled that u1+Δ1=u2+Δ2 or u1-Δ1=u2-Δ2.

If the group offset information is group offset enabling information, the group offset enabling information is set to the corresponding UEm in each cell, so that after receiving the group offset enabling information, the UEm acquires new group number information according to a sum of or a difference between the allocated group number information of the RS and the preset group offset, so that different UEms have the same group number information of the RS. Specifically, the group offset enabling information may be sent to the UEm in each cell in advance through a downlink signaling. For example, the UEm may be notified of the group offset information used by a physical uplink share channel (Physical Uplink Share Channel, PUSCH for short) through the downlink signaling. The group offset enabling information may be notified to the UEm in each cell only through a signaling of 1 bit, thereby saving the signaling overhead. Moreover, the UEm in each cell acquires the same group number information of the RS according to the group offset enabling information, thereby avoiding the interference generated by the UE in each cell on a scheduled UEm when an eNB schedules the UEm.

Specifically, when a group number corresponding to the group number information obtained through the foregoing manner is greater than a group number N or smaller than 0, a modulus of N may be obtained for the group number corresponding to the group number information, thereby obtaining an available new group number.

If the group offset information is allocated new group number information, the new group number information is sent to the UEm in each cell, so that the UEm serves the allocated new group number information as the new group number information, and therefore, different UEms have the same group number information of the RS. Different UEms have the same group number information of the RS, thereby avoiding the interference generated by the UE in each cell on a scheduled UEm when an eNB schedules the UEm.

Further, on the basis of the embodiment shown in FIG. 2, the embodiment further includes:

configuring an emission parameter of the RS of the UE under each cell, so that the UEm and the UE that only is served by the primary cell of the UEm send the RSs at different time points; or configuring an emission parameter of the RS of the UE under each cell, so that the UEm and the UE that only is served by the primary cell of the UEm send the RSs at different combs.

Further, on the basis of the embodiment shown in FIG. 2, the embodiment further includes:

acquiring sending time allocated by each cell providing services for the UEm for the UE to send an RS, and acquiring time intersection information of the allocated sending time; and sending the time intersection information to the UEm, so that the UEm sends the RS in the time intersection or in a subset of the time intersection. Alternatively, information of one or more subsets of the time intersection may be sent only.

Further, on the basis of the embodiment shown in FIG. 2, the embodiment further includes:

acquiring total sounding bandwidth allocated by each cell providing services for the UEm for the UE to send an RS, and acquiring intersection information of the allocated total sounding bandwidth; and sending the intersection information of the total sounding bandwidth to the UEm, so that the UEm sends the RS in the intersection of the total sounding bandwidth or a subset of the intersection of the total sounding bandwidth. Alternatively, information of one or more subsets of the intersection of the total sounding bandwidth may be sent only. Optionally, the RS here may specifically refer to an SRS.

The UEm sends the RS in the intersection of the total sounding bandwidth or in the subset of the intersection of the total sounding bandwidth, so as to avoid interference caused by the RS of the UEm on other UEs of the auxiliary cell since the total sounding bandwidth of the UEm is greater than the total sounding bandwidth of the auxiliary cell.

Further, on the basis of the embodiment shown in FIG. 2, when each cell is respectively controlled by a different eNB, the embodiment further includes: sharing, by different eNBs, emission parameters of the RSs allocated by the respective cells, where the emission parameter of the RS at least includes the allocated group number information, or the group offset information of the RS of the UEm. Different eNBs share the emission parameters of the RSs allocated by the respective cells.

FIG. 3 is a schematic flow chart of another embodiment of a method for configuring a reference signal. As shown in FIG. 3, this embodiment includes the following steps:

> Step 301: Acquire sending time allocated by each serving cell of the UEm for the UE to send an RS, and acquire time intersection information of the allocated sending time; and
> Step 302: Send the time intersection information to the UEm, so that the UEm sends the RS in the time intersection or in a subset of the time intersection. Alternatively, information of one or more subsets of the time intersection may be sent only.

In the method for configuring the reference signal provided in the embodiment of the present invention, the sending time allocated by each serving cell for the UE to send the RS is acquired, and the time intersection information of the allocated sending time is acquired, so that the UEm sends the RS in the time intersection or in a subset of the time intersection, thereby avoiding the interference generated by the UE in each cell on a scheduled UEm when an eNB schedules the UEm.

Specifically, if the RS transmission time of the UEm of the primary cell is transmitting every transmission time interval (Transmission Time Interval, TTI for short), the RS total sounding bandwidth of the UEm in the auxiliary cell is transmitting every 2 TTIs; the time intersection of the UEm in the primary cell and the UEm in the auxiliary cell is every 2 TTIs; and a subset of every 2 TTIs may be every 4 TTIs. Therefore, the RS transmission time of the UEm in the primary cell and the UEm in the auxiliary cell may be transmitting every 2 TTIs or every 4 TTIs.

Further, on the basis of the embodiment shown in FIG. 3, the embodiment further includes:

> acquiring total sounding bandwidth allocated by each cell providing services for the UEm for the UE to send an RS, and acquiring total sounding bandwidth intersection information of the allocated total sounding bandwidth; and
> sending the total sounding bandwidth intersection information to the UEm, so that the UEm sends the RS in the total sounding bandwidth intersection or a subset of the total sounding bandwidth intersection. Alternatively, information of one or more subsets of the intersection of the total sounding bandwidth may be sent only.

The UEm sends the RS in the total sounding bandwidth intersection or in the subset of the total sounding bandwidth intersection, so as to avoid interference caused by the RS of the UEm on other UEs of the auxiliary cell since the total sounding bandwidth of the UEm is greater than the total sounding bandwidth of the auxiliary cell. Optionally, the RS here may specifically refer to an SRS.

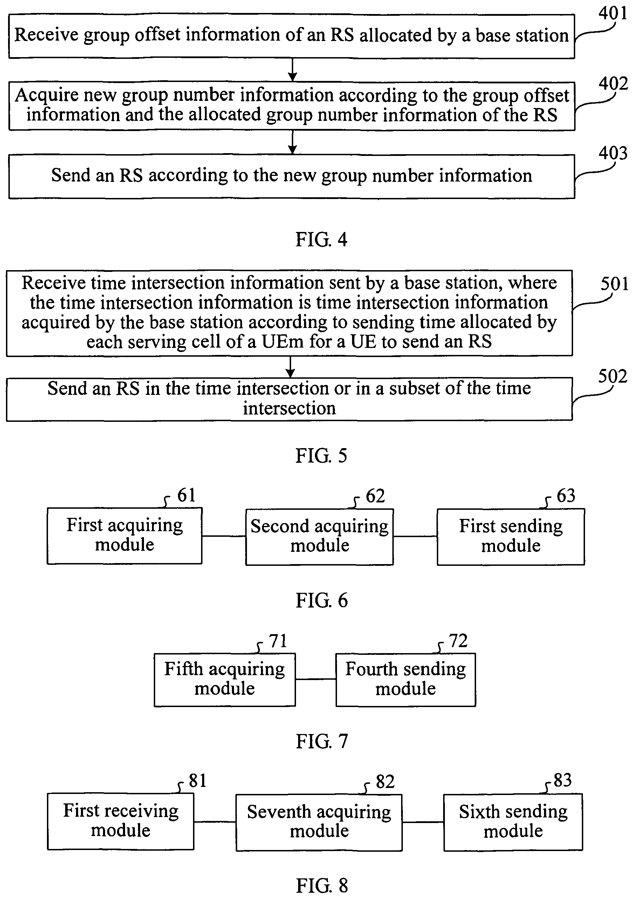

FIG. 4 is a schematic flow chart of still another embodiment of a method for configuring a reference signal. As shown in FIG. 4, this embodiment includes the following steps:

> Step 401: Receive group offset information of an RS allocated by a base station;
> Step 402: Acquire new group number information according to the group offset information and the allocated group number information of the RS; and
> Step 403: Send an RS according to the new group number information.

In the method for configuring a reference signal provided in the embodiment of the present invention, the group offset information of the RS allocated by the base station is received; new group number information is acquired according to the group offset information and the allocated group number information of the RS; and an RS is sent according to the new group number information, thereby avoiding the interference generated by the UE in each cell on a scheduled UEm when an eNB schedules the UEm.

Further, on the basis of the embodiment shown in FIG. 4, the step 402 may specifically include:

> if the group offset information is a group offset, acquiring new group number information according to a sum of or a difference between the allocated group number information of the RS and the group offset, so that the new group number information is the same as the group number information of another UEm;
> if the group offset information is group offset enabling information, after receiving the group offset enabling information, acquiring, by the UEm, new group number information according to a sum of or a difference between the allocated group number information of the RS and a preset group offset, so that the new group number information is the same as the group number information of another UEm; and
> if the group offset information specifically is allocated new group number information, serving the allocated new group number information as the new group number information, so that the new group number information is the same as the group number information of another UEm.

Further, on the basis of the embodiment shown in FIG. 4, the step 403 may specifically include:

> sending the RS at a time point different from a UE only served by a primary cell thereof according to a configured emission parameter of the RS; or sending the RS at a comb different from a UE only served by a primary cell thereof according to a configured emission parameter of the RS.

FIG. 5 is a schematic flow chart of yet another embodiment of a method for configuring a reference signal. As shown in FIG. 5, this embodiment includes the following steps:

Step 501: Receive time intersection information sent by a base station, where the time intersection information is time intersection information acquired by the base station according to sending time allocated by each serving cell of a UEm for a UE to send an RS; and

Step 502: Send an RS in the time intersection or in a subset of the time intersection.

In the method for configuring a reference signal provided in the embodiment of the present invention, the time intersection information sent by the base station is received, and the UEm sends the RS in the time intersection or in a subset of the time intersection, thereby avoiding the interference generated by the UE in each cell on a scheduled UEm when an eNB schedules the UEm.

Further, on the basis of the embodiment shown in FIG. 5, the embodiment further includes:

receiving intersection information of a total sounding bandwidth sent by a base station, where the total sounding bandwidth intersection information is the total sounding bandwidth intersection information acquired by the base station according to the total sounding bandwidth allocated by each cell providing services for the UEm for a UE to send a reference signal; and

sending an RS in the total sounding bandwidth intersection or in a subset of the total sounding bandwidth intersection. Optionally, the RS here may specifically refer to an SRS.

FIG. 6 is a schematic structure diagram of an embodiment of a device for configuring a reference signal of the present invention. As shown in FIG. 6, this embodiment includes: a first acquiring module 61, a second acquiring module 62, and a first sending module 63.

The first acquiring module 61 acquires group number information of a reference signal allocated for a user equipment UE respectively by each cell; the second acquiring module 62 acquires, according to the group number information acquired by the first acquiring module 61, group offset information of a reference signal of a user equipment UEm served by at least two cells at the same time in the UE, where the group offset information is used to update the group number information of the reference signal of the UEm; the first sending module 63 sends the group offset information acquired by the second acquiring module 62 to the UEm, so that the UEm acquires new group number information according to the allocated group number information of the reference signal and the group offset information, and sends a reference signal according to the new group number information.

In the device for configuring a reference signal provided in the embodiment of the preset invention, the first acquiring module 61 acquires group number information of an RS allocated for a UE respectively by each cel; the second acquiring module 62 acquires group offset information of the RS in the UE according to the group number information; the first sending module 63 sends the group offset information to the UEm, so that the UEm acquires new group number information according to the allocated group number information of the RS and the group offset information, and sends an RS according to the new group number information, thereby avoiding the interference generated by the UE in each cell on a scheduled UEm when an eNB schedules the UEm.

Further, on the basis of the embodiment shown in FIG. 6, this embodiment may further include: a first configuring module and/or a second configuring module. The first configuring module is configured to configure an emission parameter of the reference signal of the UE under each cell, so that the UEm and the UE that only is served by a primary cell of the UEm send the reference signals at different time points; or, the second configuring module is configured to configure an emission parameter of the reference signal of the UE under each cell, so that the UEm and the UE that only is served by a primary cell of the UEm send the reference signals at different combs.

Further, on the basis of the embodiment shown in FIG. 6, this embodiment may further include: a third acquiring module and a second sending module. The third acquiring module is configured to acquire sending time allocated by each cell providing services for the UEm for the UE to send the reference signal, and acquire time intersection information of the allocated sending time; and the second sending module, configured to send the time intersection information to the UEm, so that the UEm sends the reference signal in the time intersection or in a subset of the time intersection.

Further, on the basis of the embodiment shown in FIG. 6, this embodiment may further include: a fourth acquiring module and a third sending module. The fourth acquiring module is configured to acquire a total sounding bandwidth allocated by each cell providing services for the UEm for the UE to send the reference signal, and acquire total sounding bandwidth intersection information of the allocated total sounding bandwidth; and the third sending module, configured to send the intersection information of the total sounding bandwidth to the UEm, so that the UEm sends the reference signal in the total sounding bandwidth intersection or a subset of the total sounding bandwidth intersection. Optionally, the RS here may specifically refer to an SRS.

Further, on the basis of the embodiment shown in FIG. 6, this embodiment may further include: a sharing module. The sharing module is configured to, when each cell is respectively controlled by a different evolved Node B eNB, enable the different eNBs to share emission parameters of reference signals allocated by the respective cells, where the emission parameter of the reference signal at least comprises the allocated group number information, or the group offset information of the reference signal of the UEm.

FIG. 7 is a schematic structure diagram of another embodiment of a device for configuring a reference signal of the present invention. As shown in FIG. 7, this embodiment includes: a fifth acquiring module 71 and a fourth sending module 72.

The fifth acquiring module 71 acquires sending time allocated by each serving cell of a user equipment UEm served by at least two cells at the same time for a UE to send a reference signal, and acquires time intersection information of the allocated sending time; and the fourth sending module 72 sends the time intersection information acquired by the fifth acquiring module 71 to the UEm, so that the UEm sends the reference signal in the time intersection or in a subset of the time intersection.

In the device for configuring the reference signal provided in the embodiment of the present invention, the fifth acquiring module 71 acquires the sending time allocated by each serving cell for the UE to send the RS, and acquires the time intersection information of the allocated sending time, so that the UEm sends the RS in the time intersection or in a subset of the time intersection, thereby avoiding the interference generated by the UE in each cell on a scheduled UEm when an eNB schedules the UEm.

Further, on the basis of the embodiment shown in FIG. 7, this embodiment may further include: a sixth acquiring module and a fifth sending module. The sixth acquiring module is configured to acquire a total sounding bandwidth allocated by each cell providing services for the UEm for the UE to send the reference signal, and acquire total sounding bandwidth intersection information of the allocated total sounding bandwidth; and the fifth sending module, configured to send the intersection information of the total sounding bandwidth to the UEm, so that the UEm sends the reference signal in the total sounding bandwidth intersection or a subset of the total sounding bandwidth intersection. Optionally, the RS here may specifically refer to an SRS.

FIG. 8 is a schematic structure diagram of an embodiment of a user equipment of the present invention. As shown in FIG. 8, this embodiment includes: a first receiving module 81, a seventh acquiring module 82, and a sixth sending module 83.

The first receiving module 81 receives group offset information of a reference signal allocated by a base station; the seventh acquiring module 82 acquires new group number information according to the group offset information received by the first receiving module 81 and the allocated group number information of the reference signal; and the sixth sending module 83 sends a reference signal according to the new group number information acquired by the seventh acquiring module 82.

In the user equipment provided in the embodiment of the present invention, the first receiving module 81 receives the group offset information of the RS allocated by the base station; the seventh acquiring module 82 acquires new group number information according to the group offset information and the allocated group number information of the RS; and the sixth sending module 83 sends an RS according to the new group number information, thereby avoiding the interference generated by the UE in each cell on a scheduled UEm when an eNB schedules the UEm.

Further, on the basis of the embodiment shown in FIG. 8, the seventh acquiring module 82 may further include: a first acquiring unit, and/or a second acquiring unit, and/or a third acquiring unit.

If the group offset information is a group offset, the first acquiring unit is configured to acquire new group number information according to a sum of or a difference between the allocated group number information of the reference signal and the group offset, so that the new group number information is the same as group number information of another user equipment UEm served by at least two cells at the same time;

If the group offset information is group offset enabling information, the second acquiring unit is configured to, after receiving the group offset enabling information, acquire new group number information according to a sum of or a difference between the allocated group number information of the reference signal and a preset group offset, so that the new group number information is the same as group number information of another user equipment UEm served by at least two cells at the same time; and

If the group offset information is allocated new group number information, the third acquiring unit is configured to serve the allocated new group number information as new group number information, so that the new group number information is the same as group number information of another user equipment UEm served by at least two cells at the same time.

On the basis of the embodiment shown in FIG. 8, the sixth sending module 82 may further include: a first sending unit, and/or a second sending unit. The first sending unit is configured to send the reference signal at a time point different from a UE only served by a primary cell thereof according to a configured emission parameter of the reference signal; and the second sending unit is configured to send the reference signal at a comb different from a UE only served by a primary cell thereof according to a configured emission parameter of the reference signal.

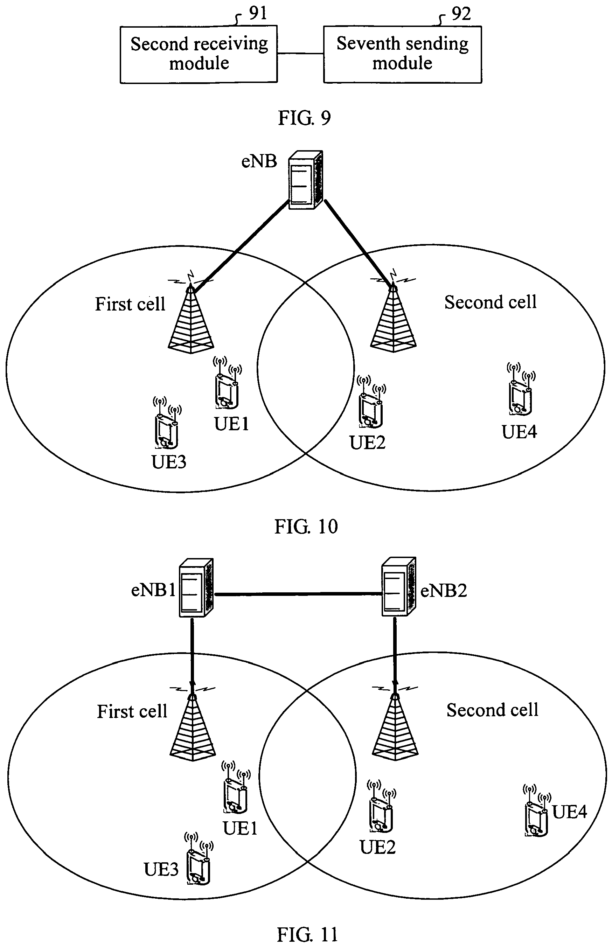

FIG. 9 is a schematic structure diagram of another embodiment of a user equipment of the present invention. As shown in FIG. 9, this embodiment includes: a second receiving module 91, and a seventh sending module 92.

The second receiving module 91 receives time intersection information sent by a base station, where the time intersection information is time intersection information acquired by the base station according to sending time allocated by each serving cell of a user equipment UEm served by at least two cells at the same time for sending a reference signal to a UE; and the seventh sending module 92 sends a reference signal in the time intersection or in a subset of the time intersection received by the second receiving module 91.

In the user equipment provided in the embodiment of the present invention, the second receiving module 91 receives the time intersection information sent by the base station, and the seventh sending module 92 sends the RS in the time intersection or in a subset of the time intersection, thereby avoiding the interference generated by the UE in each cell on a scheduled UEm when an eNB schedules the UEm.

Further, on the basis of the embodiment shown in FIG. 9, this embodiment may further include: a third receiving module and an eighth sending module. The third receiving module is configured to receive intersection information of total sounding bandwidth sent by a base station, where the total sounding bandwidth intersection information is total sounding bandwidth intersection information acquired by the base station according to the total sounding bandwidth allocated by each cell providing services for the UEm for a UE to send a reference signal; and the eighth sending module is configured to send a reference signal in the total sounding bandwidth intersection or in a subset of the total sounding bandwidth intersection. Optionally, the RS here may specifically refer to an SRS.

FIG. 10 is a schematic structure diagram of an embodiment of a system for configuring a reference signal applicable to an embodiment of the present invention. As shown in FIG. 10, an eNB connects to a first cell and a second cell in a wired manner, and controls UEs in the first cell and the second cell. A UE1 is a UEm in the first cell that can be served by the first cell and the second cell; a UE2 is a UEm in the second cell that can be served by the first cell and the second cell; a UE3 is a common UE that can only be served by the first cell; and a UE4 is a common UE that can only be served by the second cell.

The eNB control resource information of RSs of the first cell and the second cell at the same time, and therefore, RSs between the UE1, UE2, and other UEs (the UE3, UE4) may be coordinated directly through configuring parameters. Specifically, the foregoing description may be implemented through the following manner. The eNB acquires group number information of RSs of the UE (UE1) in the first cell and the UE (UE2) in the second cell, and acquires group offset information of the RS of the UEms (UE1, UE2) in the first cell and the second cell according to the group number information, so that the group number information of the RSs of the UE1 in the first cell and the UE2 in the second cell are the same as new group number information formed by the group offset information. The eNB sends the new group number information to the UE1 in the first cell and the UE2 in the second cell, so that the UE1 in the first cell and the UE2 in the second cell send RSs according to the new group number information.

The UE1 and the UE2 that are served by the first cell and the second cell have the same new group number information, so that the UE1 and the UE2 that are served by the first cell and the second cell send the RSs according to the same new group number information, thereby avoiding the interference generated by the UE2 in the second cell on the scheduled UE1 when the eNB schedules the UE1 in the first cell.

FIG. 11 is a schematic structure diagram of another embodiment of a system for configuring a reference signal applicable to an embodiment of the present invention. As shown in FIG 11, an eNB1 and an eNB2 are connected through a signaling interface between eNBs; the eNB1 is connected to a first cell in a wired manner; the eNB2 is connected to a second cell in a wired manner; the eNB1 controls UEs (UE1, UE3) in the first cell; and the eNB2 controls UEs (UE2, UE4) in the second cell. The UE1 is a UEm in the first cell that can be served by the first cell and the second cell; the UE2 is a UEm in the second cell that can be served by the first cell and the second cell; the UE3 is a common UE in the first cell; and the UE4 is a common UE in the second cell.

The eNB1 controls resource information of RSs of the UEs in the first cell; the eNB2 controls resource information of RSs of the UEs in the second cell; and the eNB1 and the eNB2 are independent with each other, so the embodiment of the present invention enables the resource information of the RSs of the UEms to be orthogonal, thereby avoiding the interference generated between the RS of the UEm in the first cell under the eNB 1 and the RS of the UEm in the second cell under the eNB2.

Specifically, the eNB1 acquires, through an interface, first configuration information of the RS of the UEm (UE2) in the second cell under the eNB2, acquires second configuration information of the RS of the UEm (UE1) in the first cell under the eNB1, and sends the second configuration information to the UE1 under the eNB1, so that the UE1 sends the RS to the eNB2 according to the second configuration information. The first configuration information is orthogonal to the second configuration information, so the UE1 may avoid the interference of the UEs (UE2, UE4) of the eNB2 when sending the RS to the eNB2.

Further, the first configuration information and the second configuration information may specifically be: sending time information of the RS, sending bandwidth information of the RS (may specifically be: initial frequency of a sending bandwidth, a sequence length, a comb and/or total sounding bandwidth), information of a sequence where the RS locates (including group number information, group offset information, group number information and/or circulation shift of UE).

The embodiments of the present invention may specifically be applied in a CoMP system, and in the CoMP system, specific parameters in the cells related to the RSs in multiple cells are configured cooperatively, so that when the eNB schedules the UE, in the serving cells of the UEm, the RS used by the UEm is orthogonal to the RSs of other UEms and common UEs, thereby avoiding the interference between cells.

Persons of ordinary skill in the art may understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

Finally, it should be noted that, the above embodiments are merely provided for describing the technical solutions of the present invention, but are not intended to limit the present invention. It should be understood by persons of ordinary skill in the art that: although the present invention has been described in detail with reference to the embodiments, modifications may still be made to the technical solutions described in the embodiments, or equivalent replacements may be made to some technical features in the technical solutions, and these modifications or replacements do not cause corresponding technical solutions to depart from the scope of the technical solutions of present invention, as defined by the appended claims.

**Claims**

1. A method for configuring a reference signal to a user equipment UEm served by at least two cells at the same time, comprising:

acquiring (201), by a base station, group number information of a reference signal allocated for a user equipment, UE, respectively by each cell of the at least two cells, wherein the group number information of a reference signal is a group number of a group where a sequence adopted by the reference signal locates; acquiring (202), by the base station, according to the group number information, group offset of a reference signal of the UEm, wherein the group offset is used to update the group number information of the reference signal of the UEm; sending (203), by the base station, the group offset to the UEm, so that the UEm acquires new group number information of the UEm according to the allocated group number information of the reference signal of the UEm and the group offset, and sends the reference signal of the UEm according to the new group number information of the UEm, where the new group number information of the UEm is the same as new group number information of another UEm served by the at least two cells at the same time; wherein the another UEm is located in another cell of the at least two cells, the another cell is different from the cell where the UEm is located; and configuring, by the base station, an emission parameter of the reference signal of the UEm, so that the UEm sends the reference signal at a time point different from a UE only served by a primary cell of the UEm according to the configured emission parameter of the reference signal.

2. The method according to claim 1, wherein:

the new group number information of the UEm is acquired according to a sum of or a difference between the allocated group number information of the reference signal and the group offset.

3. The method according to any one of claims 1 to 2, further comprising:

acquiring (301), by the base station, sending time allocated, by each cell providing services for the UEm, for the UE to send the reference signal, and acquiring time intersection information of the allocated sending time; and sending (302), by the base station, the time intersection information or information of one or more subsets of the time intersection to the UEm, so that the UEm sends the reference signal in the time intersection or in a subset of the time intersection.

4. The method according to any one of claims 1 to 2, further comprising:

acquiring, by the base station, a total sounding bandwidth allocated by each cell providing services for the UEm, for the UE to send the reference signal, and acquiring intersection information of the allocated total sounding bandwidth; and sending, by the base station, intersection information of the total sounding bandwidth or information of one or more subsets of an intersection of the total sounding bandwidth to the UEm, so that the UEm sends the reference signal in the intersection of the total sounding bandwidth or in a subset of the intersection of the total sounding bandwidth.

5. The method according to any one of claims 1 to 2, when each cell is respectively controlled by a different evolved Node B, eNB, further comprising: sharing, by the different eNBs, emission parameters of reference signals allocated by the respective cells, wherein the emission parameter of the reference signal at least comprises the allocated group number information, or the group offset of the reference signal of the UEm.

6. The method according to any one of claims 1 to 2, wherein the reference signal comprises: a signal modulated through a sequence.

7. A method for configuring a reference signal, comprising:

receiving (401), by a user equipment UEm served by at least two cells at the same time, group offset of a reference signal allocated by a base station;
acquiring (402), by the UEm, new group number information of the UEm according to the group offset and allocated group number information of the reference signal of the UEm, where the allocated group number information is a group number of a group where a sequence adopted by the reference signal locates and the new group number information is a group number of a group where a sequence adopted by the reference signal locates, the new group number information of the UEm is the same as new group number information of another UEm served by the at least two cells at the same time; wherein the another UEm is located in another cell of the at least two cells, the another cell is different from the cell where the UEm is located; and
sending (403), by the UEm, the reference signal of the UEm according to the new group number information of the UEm,
wherein the sending the reference signal according to the new group number information comprises:

sending, by the UEm, the reference signal at a time point different from a user equipment, UE, only served by a primary cell of the UEm according to a configured emission parameter of the reference signal.

8. The method according to claim 7, wherein:

the acquiring (402), by the UEm, new group number information according to the group offset and the allocated group number information of the reference signal specifically comprises: acquiring, by the UEm, new group number information according to a sum of or a difference between the allocated group number information of the reference signal and the group offset.

9. A device for configuring a reference signal, comprising:

a first acquiring module (61), configured to acquire group number information of a reference signal allocated for a user equipment, UE, respectively by each cell of at least two cells, wherein the group number information of a reference signal is a group number of a group where a sequence adopted by the reference signal locates;
a second acquiring module (62), configured to acquire, according to the group number information, group offset of a reference signal of a user equipment, UEm, served by the at least two cells at the same time where the group offset is used to update the group number information of the reference signal of the UEm;
a first sending module (63), configured to send the group offset to the UEm, so that the UEm acquires new group number information of the UEm according to the allocated group number information of the reference signal of the UEm and the group offset, and sends the reference signal of the UEm according to the new group number information of the UEm, where the new group number information of the UEm is the same as new group number information of another UEm served by the at least two cells at the same time; wherein the another UEm is located in another cell of the at least two cells, the another cell is different from the cell where the UEm is located; and
a first configuring module, configured to configure an emission parameter of the reference signal of the UEm, so that the UEm sends the reference signal at a time point different from a UE only served by a primary cell of the UEm according to the configured emission parameter of the reference signal.

10. The device according to claim 9, further comprising:

a third acquiring module, configured to acquire sending time allocated, by each cell providing services for the UEm, for the UE to send the reference signal, and acquire time intersection information of the allocated sending time; and
a second sending module, configured to send the time intersection information or information of one or more subsets of the time intersection to the UEm, so that the UEm sends the reference signal in the time intersection or in a subset of the time intersection.

11. The device according to claim 9, further comprising:

a fourth acquiring module, configured to acquire a total sounding bandwidth allocated by each cell providing services for the UEm for the UE to send the reference signal, and acquire total sounding bandwidth intersection information of the allocated total sounding bandwidth; and a third sending module, configured to send the intersection information of the total sounding bandwidth or information of one or more subsets of an intersection of the total sounding bandwidth to the UEm, so that the UEm sends the reference signal in the total sounding bandwidth intersection or a subset of the total sounding bandwidth intersection.

12. The device according to any one of claims 9 to 11, further comprising: a sharing module; wherein the sharing module is configured to, when each cell is respectively controlled by a different evolved Node B eNB, enable the different eNBs to share emission parameters of reference signals allocated by the respective cells, wherein the emission parameter of the reference signal at least comprises the allocated group number information, or the group offset of the reference signal of the UEm.

13. A user equipment UEm served by at least two cells at the same time, comprising:

a first receiving module (81), configured to receive group offset of a reference signal allocated by a base station; a seventh acquiring module (82), configured to acquire new group number information of the UEm according to the group offset and allocated group number information of the reference signal of the UEm, where the allocated group number information is a group number of a group where a sequence adopted by the reference signal locates and the new group number information is a group number of a group where a sequence adopted by the reference signal locates, the new group number information of the UEm is the same as new group number information of another UEm served by the at least two cells at the same time; wherein the another UEm is located in another cell of the at least two cells, the another cell is different from the cell where the UEm is located; and a sixth sending module (83), configured to send the reference signal of the UEm according to the new group number information of the UEm, wherein the sixth sending module comprises a first sending unit; wherein the first sending unit is configured to send the reference signal at a time point different from a user equipment, UE, only served by a primary cell of the UEm according to a configured emission parameter of the reference signal.

14. The user equipment according to claim 13, wherein the seventh acquiring module comprises: a first acquiring unit; wherein the first acquiring unit is configured to acquire new group number information according to a sum of or a difference between the allocated group number information of the reference signal and the group offset.

**Patentansprüche**

1. Verfahren zum Auslegen eines Referenzsignals auf eine Teilnehmereinrichtung UEm, die von mindestens zwei Zellen gleichzeitig bedient wird, das Folgendes umfasst:

Erfassen (201) durch eine Basisstation von Gruppennummerninformationen eines Referenzsignals, das für eine Teilnehmereinrichtung, UE, jeweils von jeder Zelle der mindestens zwei Zellen zugeteilt ist, wobei die Gruppennummerninformationen eines Referenzsignals eine Gruppennummer einer Gruppe sind, in der sich eine Sequenz, die vom Referenzsignal übernommen ist, befindet; Erfassen (202) durch die Basisstation gemäß den Gruppennummerninformationen eines Gruppenversatzes eines Referenzsignals der UEm, wobei der Gruppenversatz verwendet wird, um die Gruppennummerninformationen des Referenzsignals der UEm zu aktualisieren; Senden (203) durch die Basisstation des Gruppenversatzes zur UEm, derart, dass die UEm gemäß den zugeteilten Gruppennummerninformationen des Referenzsignals der UEm und dem Gruppenversatz neue Gruppennummerninformationen der UEm erfasst und das Referenzsignal der UEm gemäß den neuen Gruppennummerninformationen der UEm sendet, wo die neuen Gruppennummerninformationen der UEm dieselben sind wie neue Gruppennummerninformationen einer anderen UEm, die von den mindestens zwei Zellen gleichzeitig bedient wird; wobei die andere UEm sich in einer anderen Zelle der mindestens zwei Zellen befindet, wobei die andere Zelle sich von der Zelle unterscheidet, in der sich die UEm befindet; und Auslegen durch die Basisstation eines Emissionsparameters des Referenzsignals der UEm derart, dass die UEm das Referenzsignal zu einem Zeitpunkt, der sich von einer UE unterscheidet, die nur von einer primären Zelle der UEm bedient wird, gemäß dem ausgelegten Emissionsparameter des Referenzsignals sendet.

2. Verfahren nach Anspruch 1, wobei:

die neuen Gruppennummerninformationen der UEm gemäß einer Summe aus oder einer Differenz zwischen den zugeteilten Gruppennummerninformationen des Referenzsignals und dem Gruppenversatz erfasst werden.

3. Verfahren nach einem der Ansprüche 1 bis 2, das ferner Folgendes umfasst:

Erfassen (301) durch die Basisstation einer Sendezeit, die der UE von jeder Zelle, die Dienste für die UEm bereitstellt, zum Senden des Referenzsignals zugeteilt wird, und Erfassen von Zeitüberschneidungsinformationen der zugeteilten Sendezeit und Senden (302) durch die Basisstation der Zeitüberschneidungsinformationen oder von Informationen zu einem oder mehreren Teilsätzen der Zeitüberschneidung an die UEm derart, dass die UEm das Referenzsignal in der Zeitüberschneidung oder in einem Teilsatz der Zeitüberschneidung sendet.

4. Verfahren nach einem der Ansprüche 1 bis 2, das ferner Folgendes umfasst:

Erfassen durch die Basisstation einer Sondierungsgesamtbandbreite, die der UE von jeder Zelle, die Dienste für die UEm bereitstellt, zum Senden des Referenzsignals zugeteilt wird, und Erfassen von Überschneidungsinformationen der zugeteilten Sondierungsgesamtbandbreite und Senden durch die Basisstation von Überschneidungsinformationen zur Sondierungsgesamtbandbreite oder Informationen zu einem oder mehreren Untersätzen einer Überschneidung der Sondierungsgesamtbandbreite an die UEm derart, dass die UEm das Referenzsignal in der Überschneidung der Sondierungsgesamtbandbreite oder in einem Untersatz der Überschneidung der Sondierungsgesamtbandbreite sendet.

5. Verfahren nach einem der Ansprüche 1 bis 2, das, wenn jede Zelle jeweils von einem anderen "Evolved Node B", eNB, gesteuert wird, ferner Folgendes umfasst: Gemeinsamnutzung durch die verschiedenen eNBs von Emissionsparametern von Referenzsignalen, die durch die jeweiligen Zellen zugeteilt sind, wobei der Emissionsparameter des Referenzsignals mindestens die zugeteilten Gruppennummerninformationen oder den Gruppenversatz des Referenzsignals der UEm umfasst.

6. Verfahren nach einem der Ansprüche 1 bis 2, wobei das Referenzsignal Folgendes umfasst: ein Signal, das durch eine Sequenz moduliert ist.

7. Verfahren zum Auslegen eines Referenzsignals, das Folgendes umfasst:

Empfangen (401) durch eine Teilnehmereinrichtung UEm, die von mindestens zwei Zellen gleichzeitig bedient wird, eines Gruppenversatzes eines Referenzsignals, das von einer Basisstation zugeteilt ist; Erfassen (402) durch die UEm der neuen Gruppennummerninformationen der UEm gemäß dem Gruppenversatz und den zugeteilten Gruppennummerninformationen des Referenzsignals der UEm, wo die zugeteilten Gruppennummerninformationen eine Gruppennummer einer Gruppe sind, in der sich eine Sequenz befindet, die vom Referenzsignal übernommen ist, und die neuen Gruppennummerninformationen eine Gruppennummer einer Gruppe sind, in der sich eine Sequenz befindet, die vom Referenzsignal übernommen ist, die neuen Gruppennummerninformationen der UEm dieselben sind wie neue Gruppennummerninformationen einer anderen UEm, die von den mindestens zwei Zellen gleichzeitig bedient wird; wobei die andere UEm sich in einer anderen Zelle der mindestens zwei Zellen befindet, wobei die andere Zelle sich von der Zelle unterscheidet, in der die UEm sich befindet; und Senden (403) durch die UEm des Referenzsignals der UEm gemäß den neuen Gruppennummerninformationen der UEm, wobei das Senden des Referenzsignals gemäß den neuen Gruppennummerninformationen Folgendes umfasst:

Senden durch die UEm des Referenzsignals zu einem Zeitpunkt, der sich von einer Teilnehmereinrichtung, UE, unterscheidet, die nur von einer primären Zelle der UEm bedient wird, gemäß dem ausgelegten Emissionsparameter des Referenzsignals.

8. Verfahren nach Anspruch 7, wobei:

das Erfassen (402) durch die UEm von neuen Gruppennummerninformationen gemäß dem Gruppenversatz und den zugeteilten Gruppennummerninformationen des Referenzsignals speziell Folgendes umfasst: Erfassen durch die UEm von neuen Gruppennummerninformationen gemäß einer Summe aus oder einer Differenz zwischen den zugeteilten Gruppennummerninformationen des Referenzsignals und dem Gruppenversatz.

9. Vorrichtung zum Auslegen eines Referenzsignals, die Folgendes umfasst:

ein erstes Erfassungsmodul (61), das dazu ausgelegt ist, Gruppennummerninformationen eines Referenzsignals zu erfassen, das für eine Teilnehmereinrichtung, UE, jeweils von jeder Zelle der mindestens zwei Zellen zugeteilt ist, wobei die Gruppennummerninformationen eines Referenzsignals eine Gruppennummer einer Gruppe sind, in der sich eine Sequenz befindet, die vom Referenzsignal übernommen ist;
ein zweites Erfassungsmodul (62), das dazu ausgelegt ist, gemäß den Gruppennummerninformationen einen Gruppenversatz eines Referenzsignals einer Teilnehmereinrichtung, UEm, zu erfassen, die von den mindestens zwei Zellen gleichzeitig bedient wird, wo der Gruppenversatz verwendet wird, um die Gruppennummerninformationen des Referenzsignals der UEm zu aktualisieren;
ein erstes Sendemodul (63), das dazu ausgelegt ist, den Gruppenversatz zur UEm zu senden, derart, dass die UEm gemäß den zugeteilten Gruppennummerninformationen des Referenzsignals der UEm und dem Gruppenversatz neue Gruppennummerninformationen der UEm erfasst und das Referenzsignal der UEm gemäß den neuen Gruppennummerninformationen der UEm sendet, wo die neuen Gruppennummerninformationen der UEm dieselben sind wie neue Gruppennummerninformationen einer anderen UEm, die von den mindestens zwei Zellen gleichzeitig bedient wird; wobei die andere UEm sich in einer anderen Zelle der mindestens zwei Zellen befindet, wobei die andere Zelle sich von der Zelle unterscheidet, in der sich die UEm befindet; und
ein erstes Auslegungsmodul, das dazu ausgelegt ist, einen Emissionsparameter des Referenzsignals der UEm derart auszulegen, dass die UEm das Referenzsignal zu einem Zeitpunkt, der sich von einer UE unterscheidet, die nur von einer primären Zelle der UEm bedient wird, gemäß dem ausgelegten Emissionsparameter des Referenzsignals sendet.

10. Vorrichtung nach Anspruch 9, die ferner Folgendes umfasst:

ein drittes Erfassungsmodul, das dazu ausgelegt ist, eine Sendezeit zu erfassen, die der UE von jeder Zelle, die Dienste für die UEm bereitstellt, zum Senden des Referenzsignals zugeteilt wird, und Zeitüberschneidungsinformationen der zugeteilten Sendezeit zu erfassen; und
ein zweites Sendemodul, das dazu ausgelegt ist, die Zeitüberschneidungsinformationen oder Informationen zu einem oder mehreren Teilsätzen der Zeitüberschneidung an die UEm zu senden, derart, dass die UEm das Referenzsignal in der Zeitüberschneidung oder in einem Teilsatz der Zeitüberschneidung sendet.

11. Vorrichtung nach Anspruch 9, die ferner Folgendes umfasst:

ein viertes Erfassungsmodul, das dazu ausgelegt ist, eine Sondierungsgesamtbandbreite zu erfassen, die der UE von jeder Zelle, die Dienste für die UEm bereitstellt, zum Senden des Referenzsignals zugeteilt wird, und Überschneidungsinformationen zur Sondierungsgesamtbandbreite der zugeteilten Sondierungsgesamtbandbreite zu erfassen; und
ein drittes Sendemodul, das dazu ausgelegt ist, die Überschneidungsinformationen zur Sondierungsgesamtbandbreite oder Informationen zu einem oder mehreren Teilsätzen einer Überschneidung der Sondierungsgesamtbandbreite an die UEm zu senden, derart, dass die UEm das Referenzsignal in der Überschneidung der Sondierungsgesamtbandbreite oder in einem Untersatz der Überschneidung der Sondierungsgesamtbandbreite sendet.

12. Vorrichtung nach einem der Ansprüche 9 bis 11, die ferner Folgendes umfasst: ein Gemeinsamnutzungsmodul; wobei
das Gemeinsamnutzungsmodul dazu ausgelegt ist, wenn jede Zelle jeweils von einem anderen "Evolved Node B", eNB, gesteuert wird, es den verschiedenen eNBs zu erlauben, Emissionsparameter von Referenzsignalen, die durch die jeweiligen Zellen zugeteilt sind, gemeinsam zu nutzen, wobei der Emissionsparameter des Referenzsignals mindestens die zugeteilten Gruppennummerninformationen oder den Gruppenversatz des Referenzsignals der UEm umfassen.

13. Teilnehmereinrichtung UEm, die von mindestens zwei Zellen gleichzeitig bedient wird und Folgendes umfasst:

ein erstes Empfangsmodul (81), das dazu ausgelegt ist, einen Gruppenversatz eines Referenzsignals zu empfangen, das von einer Basisstation zugeteilt ist;
ein siebtes Erfassungsmodul (82), das dazu ausgelegt ist, neue Gruppennummerninformationen der UEm gemäß dem Gruppenversatz und den zugeteilten Gruppennummerninformationen des Referenzsignals der UEm zu erfassen, wo die zugeteilten Gruppennummerninformationen eine Gruppennummer einer Gruppe sind, in der sich eine Sequenz befindet, die vom Referenzsignal übernommen ist, und die neuen Gruppennummerninformationen eine Gruppennummer einer Gruppe sind, in der sich eine Sequenz befindet, die vom Referenzsignal übernommen ist, die neuen Gruppennummerninformationen der UEm dieselben sind wie neue Gruppennummerninformationen einer anderen UEm, die von den mindestens zwei Zellen gleichzeitig bedient wird; wobei die andere UEm sich in einer anderen Zelle der mindestens zwei Zellen befindet, wobei die andere Zelle sich von der Zelle unterscheidet, in der sich die UEm befindet; und

ein sechstes Sendemodul (83), das dazu ausgelegt ist, das Referenzsignal der UEm gemäß den neuen Gruppennummerninformationen der UEm zu senden,

wobei das sechste Sendemodul eine erste Sendeeinheit umfasst; wobei

die erste Sendeeinheit dazu ausgelegt ist, das Referenzsignal gemäß einem ausgelegten Emissionsparameter des Referenzsignals zu einem Zeitpunkt zu senden,

der sich von einer Teilnehmereinrichtung, UE, unterscheidet, die nur von einer primären Zelle der UEm bedient wird.

14. Teilnehmereinrichtung nach Anspruch 13, wobei das siebte Erfassungsmodul Folgendes umfasst: eine erste Erfassungseinheit; wobei

die erste Erfassungseinheit dazu ausgelegt ist, neue Gruppennummerninformationen gemäß einer Summe aus oder einer Differenz zwischen den zugeteilten Gruppennummerninformationen des Referenzsignals und dem Gruppenversatz zu erfassen.

**Revendications**

1. Procédé de configuration d'un signal de référence pour un équipement d'utilisateur UEm desservi par au moins deux cellules en même temps, le procédé consistant à :

acquérir (201), par une station de base, une information de numéro de groupe d'un signal de référence affecté respectivement à un équipement d'utilisateur (UE) par chaque cellule des au moins deux cellules, l'information de numéro de groupe d'un signal de référence étant un numéro de groupe d'un groupe dans lequel se trouve une séquence adoptée par le signal de référence ;

acquérir (202), par la station de base, selon l'information de numéro de groupe, un décalage de groupe d'un signal de référence de l'UEm, le décalage de groupe étant utilisé pour mettre à jour l'information de numéro de groupe du signal de référence de l'UEm ;

envoyer (203), par la station de base, le décalage de groupe à l'UEm, de sorte que l'UEm acquière une nouvelle information de numéro de groupe de l'UEm selon l'information de numéro de groupe affectée du signal de référence de l'UEm et le décalage de groupe, et envoie le signal de référence de l'UEm selon la nouvelle information de numéro de groupe de l'UEm, la nouvelle information de numéro de groupe de l'UEm étant la même qu'une nouvelle information de numéro de groupe d'un autre UEm desservi par les au moins deux cellules en même temps ; l'autre UEm étant situé dans une autre cellule des au moins deux cellules, l'autre cellule étant différente de la cellule dans laquelle l'UEm est située ; et

configurer, par la station de base, un paramètre d'émission du signal de référence de l'UEm, de sorte que l'UEm envoie le signal de référence à un point temporel différent d'un UE desservi uniquement par une cellule principale de l'UEm selon le paramètre d'émission configuré du signal de référence.

2. Procédé selon la revendication 1, dans lequel :

la nouvelle information de numéro de groupe de l'UEm est acquise selon une somme de l'information de numéro de groupe affectée et du décalage de groupe, ou une différence entre l'information de numéro de groupe affectée et le décalage de groupe.

3. Procédé selon l'une quelconque des revendications 1 à 2, consistant en outre à :

acquérir (301), par la station de base, l'heure d'envoi affectée, par chaque cellule fournissant des services à l'UEm, pour que l'UE envoie le signal de référence, et acquérir une information d'intersection temporelle de l'heure d'envoi affectée ; et

envoyer (302), par la station de base, l'information d'intersection temporelle ou une information sur un ou plusieurs sous-ensembles de l'intersection temporelle à l'UEm, de sorte que l'UEm envoie le signal de référence dans l'intersection temporelle ou dans un sous-ensemble de l'intersection temporelle.

4. Procédé selon l'une quelconque des revendications 1 à 2, consistant en outre à :

acquérir, par la station de base, une bande passante de sondage totale affectée par chaque cellule fournissant des services à l'UEm, pour que l'UE envoie le signal de référence, et acquérir une information d'intersection de la bande passante de sondage totale affectée ; et envoyer, par la station de base, une information d'intersection de la bande passante de sondage totale ou une information d'un ou plusieurs sous-ensembles d'une intersection de la bande passante de sondage totale à l'UEm, de sorte que l'UEm envoie le signal de référence dans l'intersection de la bande passante de sondage totale ou dans un sous-ensemble de l'intersection de la bande passante de sondage totale.

5. Procédé selon l'une quelconque des revendications 1 et 2, consistant en outre, quand chaque cellule est respectivement contrôlée par un noeud B évolué (eNB) différent, à : partager, par les eNB différents, des paramètres d'émission de signaux de référence affectés par les cellules respectives, le paramètre d'émission du signal de référence comprenant au moins l'information de numéro de groupe affectée ou le décalage de groupe du signal de référence de l'UEm.

6. Procédé selon l'une quelconque des revendications 1 et 2, dans lequel le signal de référence comprend : un signal modulé par l'intermédiaire d'une séquence.

7. Procédé de configuration d'un signal de référence, consistant à :

recevoir (401), par un équipement d'utilisateur UEm desservi par au moins deux cellules en même temps, un décalage de groupe d'un signal de référence affecté par une station de base ; acquérir (402), par l'UEm, une nouvelle information de numéro de groupe de l'UEm selon le décalage de groupe et une information de numéro de groupe affectée du signal de référence de l'UEm, l'information de numéro de groupe affectée étant un numéro de groupe d'un groupe dans lequel se trouve une séquence adoptée par le signal de référence, et la nouvelle information de numéro de groupe étant un numéro de groupe d'un groupe dans lequel se trouve une séquence adoptée par le signal de référence, la nouvelle information de numéro de groupe de l'UEm étant la même qu'une nouvelle information de numéro de groupe d'un autre UEm desservi par les au moins deux cellules en même temps ; l'autre UEm étant situé dans une autre cellule des au moins deux cellules, l'autre cellule étant différente de la cellule dans laquelle l'UEm est située ; et
envoyer (403), par l'UEm, le signal de référence de l'UEm selon la nouvelle information de numéro de groupe de l'UEm,
l'envoi du signal de référence selon la nouvelle information de numéro de groupe consistant à :

envoyer, par l'UEm, le signal de référence à un point temporel différent d'un équipement d'utilisateur (UE) desservi uniquement par une cellule principale de l'UEm selon un paramètre d'émission configuré du signal de référence.

8. Procédé selon la revendication 7, dans lequel :

l'acquisition (402), par l'UEm, d'une nouvelle information de numéro de groupe selon le décalage de groupe et l'information de numéro de groupe affectée du signal de référence consiste en particulier à :

acquérir, par l'UEm, une nouvelle information de numéro de groupe selon une somme de l'information de numéro de groupe affectée du signal de référence et du décalage de groupe, ou une différence entre l'information de numéro de groupe affectée du signal de référence et le décalage de groupe.

9. Dispositif de configuration d'un signal de référence, comprenant :

un premier module d'acquisition (61), conçu pour acquérir une information de numéro de groupe d'un signal de référence affecté respectivement à un équipement d'utilisateur (UE) par chaque cellule des au moins deux cellules, l'information de numéro de groupe d'un signal de référence étant un numéro de groupe d'un groupe dans lequel se trouve une séquence adoptée par le signal de référence ;
un deuxième module d'acquisition (62), conçu pour acquérir, selon l'information de numéro de groupe, un décalage de groupe d'un signal de référence d'un équipement d'utilisateur (UEm), desservi par les au moins deux cellules en même temps, le décalage de groupe étant utilisé pour mettre à jour l'information de numéro de groupe du signal de référence de l'UEm ;
un premier module d'envoi (63), conçu pour envoyer le décalage de groupe à l'UEm, de sorte que l'UEm acquière une nouvelle information de numéro de groupe de l'UEm selon l'information de numéro de groupe affectée du signal de référence de l'UEm et le décalage de groupe, et envoie le signal de référence de l'UEm selon la nouvelle information de numéro de groupe de l'UEm, la nouvelle information de numéro de groupe de l'UEm étant la même qu'une nouvelle information de numéro de groupe d'un autre UEm desservi par les au moins deux cellules en même temps ; l'autre UEm étant situé dans une autre cellule des au moins deux cellules, l'autre cellule étant différente de la cellule dans laquelle l'UEm est situé ; et

un premier module de configuration, conçu pour configurer un paramètre d'émission du signal de référence de l'UEm, de sorte que l'UEm envoie le signal de référence à un point temporel différent d'un UE desservi uniquement par une cellule principale de l'UEm selon le paramètre d'émission configuré du signal de référence.

10. Dispositif selon la revendication 9, comprenant en outre :

un troisième module d'acquisition, conçu pour acquérir l'heure d'envoi affectée, par chaque cellule fournissant des services à l'UEm, pour que l'UE envoie le signal de référence, et acquérir une information d'intersection temporelle de l'heure d'envoi affectée ; et

un deuxième module d'envoi, conçu pour envoyer l'information d'intersection temporelle ou une information sur un ou plusieurs sous-ensembles de l'intersection temporelle à l'UEm, de sorte que l'UEm envoie le signal de référence dans l'intersection temporelle ou dans un sous-ensemble de l'intersection temporelle.

11. Dispositif selon la revendication 9, comprenant en outre :

un quatrième module d'acquisition, conçu pour acquérir une bande passante de sondage totale affectée par chaque cellule fournissant des services à l'UEm, pour que l'UE envoie le signal de référence, et acquérir une information d'intersection de bande passante de sondage totale de la bande passante de sondage totale affectée ; et

un troisième module d'envoi, conçu pour envoyer l'information d'intersection de la bande passante de sondage totale ou une information d'un ou plusieurs sous-ensembles d'une intersection de la bande passante de sondage totale à l'UEm, de sorte que l'UEm envoie le signal de référence dans l'intersection de bande passante de sondage totale ou dans un sous-ensemble de l'intersection de bande passante de sondage totale.

12. Dispositif selon l'une quelconque des revendications 9 à 11, comprenant en outre : un module de partage, le module de partage étant conçu pour, quand chaque cellule est respectivement contrôlée par un nœud B évolué (eNB) différent, permettre aux eNB différents de partager des paramètres d'émission de signaux de référence affectés par les cellules respectives, le paramètre d'émission du signal de référence comprenant au moins l'information de numéro de groupe affectée ou le décalage de groupe du signal de référence de l'UEm.

13. Équipement d'utilisateur UEm desservi par au moins deux cellules en même temps, comprenant :

un premier module de réception (81), conçu pour recevoir un décalage de groupe d'un signal de référence affecté par une station de base ; un septième module d'acquisition (82), conçu pour acquérir une nouvelle information de numéro de groupe de l'UEm selon le décalage de groupe et une information de numéro de groupe affectée du signal de référence de l'UEm, l'information de numéro de groupe affectée étant un numéro de groupe d'un groupe dans lequel se trouve une séquence adoptée par le signal de référence, et la nouvelle information de numéro de groupe étant un numéro de groupe d'un groupe dans lequel se trouve une séquence adoptée par le signal de référence, la nouvelle information de numéro de groupe de l'UEm étant la même qu'une nouvelle information de numéro de groupe d'un autre UEm desservi par les au moins deux cellules en même temps ; l'autre UEm étant situé dans une autre cellule des au moins deux cellules, l'autre cellule étant différente de la cellule dans laquelle l'UEm est située ; et un sixième module d'envoi (83), conçu pour envoyer le signal de référence à l'UEm selon la nouvelle information de numéro de groupe de l'UEm, le sixième module d'envoi comprenant une première unité d'envoi, la première unité d'envoi étant conçue pour envoyer le signal de référence à un point temporel différent d'un équipement d'utilisateur (UE) desservi uniquement par une cellule principale de l'UEm selon un paramètre d'émission configuré du signal de référence.

14. Équipement d'utilisateur selon la revendication 13, dans lequel le septième module d'acquisition comprend : une première unité d'acquisition, la première unité d'acquisition étant conçue pour acquérir une nouvelle information de numéro de groupe selon une somme de l'information de numéro de groupe affectée du signal de référence et du décalage de groupe, ou une différence entre l'information de numéro de groupe affectée du signal de référence et le décalage de groupe.

FIG. 1

| | |
|---|---|
| Acquire group number information of an RS allocated for a user equipment UE respectively by each cell | 201 |
| Acquire, according to the group number information, group offset information of an RS of a user equipment UEm served by at least two cells at the same time in the UE, where the group offset information is used to update the group number information of the RS of the UEm | 202 |
| Send the group offset information to the UEm, so that the UEm acquires new group number information according to the allocated group number information of the RS and the group offset information, and sends an RS according to the new group number information | 203 |

FIG. 2

| | |
|---|---|
| Acquire sending time allocated by each serving cell of the UEm for the UE to send an RS, and acquire time intersection information of the allocated sending time | 301 |
| Send the time intersection information to the UEm, so that the UEm sends the RS in the time intersection or in a subset of the time intersection | 302 |

FIG. 3

Receive group offset information of an RS allocated by a base station — 401

Acquire new group number information according to the group offset information and the allocated group number information of the RS — 402

Send an RS according to the new group number information — 403

FIG. 4

Receive time intersection information sent by a base station, where the time intersection information is time intersection information acquired by the base station according to sending time allocated by each serving cell of a UEm for a UE to send an RS — 501

Send an RS in the time intersection or in a subset of the time intersection — 502

FIG. 5

61
First acquiring module

62
Second acquiring module

63
First sending module

FIG. 6

71
Fifth acquiring module

72
Fourth sending module

FIG. 7

81
First receiving module

82
Seventh acquiring module

83
Sixth sending module

FIG. 8

91
92

| Second receiving module | Seventh sending module |
|---|---|

FIG. 9

FIG. 10

FIG. 11

## REFERENCES CITED IN THE DESCRIPTION

**Non-patent literature cited in the description**

- Uplink DM RS from CoMP viewpoint. *3GPP TSG RAN WG1*
- Discussion on PUCCH coordination for UL CoMP. *3GPP TSG RAN WG1*
- Uplink DM RS PUSCH Sequence-shift Pattern. *3GPP TSG RAN WG1*